# EUROPEAN PATENT APPLICATION

(11) **EP 2 712 844 A1**
(43) Date of publication of application: **02.04.2014**
(21) Application number: 12186221.3
(22) Date of filing: 27.09.2012
(51) Int. Cl.: C01B 33/025, C01B 33/037

(54) **Recycling of silicon kerfs from wafer sawing**

(71) Applicant: Fesil Sunergy AS, 7440 Trondheim (NO)
(72) Inventor: Nygaard, Lars, NO-7563 Malvik (NO); Skjølberg, Einar Martin, NO-7300 Orkanger (NO); Christiansen, Stein, NO-7022 Trondheim (NO); Andresen, Birger, NO-7036 Trondheim (NO)
(74) Representative: Kransell & Wennborg KB

(57) **Abstract**

There is provided a method of cutting a silicon ingot and recycling residual material, comprising the steps of:
a) cutting a Si ingot using carbon-containing particles as abrasive material such that Si wafers and a residual material comprising Si kerfs and carbon-containing particles are obtained;
b) purifying the residual material such that purified Si kerfs and carbon-containing particles are obtained; and
c) adding the purified Si kerfs and carbon-containing particles to a reduction process producing Si,
the method being characterized in that the carbon-containing particles added in step a) is contains less than 0.25 ppm (w/w) boron and less than 0.5 ppm (w/w) phosphorus.

## Description

### Technical field

The present disclosure relates to the field of cutting a silicon (Si) ingot and in particular to the recovering of residual material from the cutting.

### Background

In order to enhance sustainable energy production, there is a demand for cheaper solar cell panels. The making of solar cell panels comprise cutting/sawing of polycrystalline block-cast or single crystal ingots of "solar grade" silicon to provide thin silicon wafers. During the sawing, only about half of the silicon weight of the ingot is obtained as wafers while the remaining half ends up as crystalline silicone kerfs in a residual mixture together with other spent material from the cutting process. The other spent material is normally abrasive particles and a liquid that were supplied in the sawing slurry.

In order to reduce the cost of the cutting process and thus the efficiency of the whole value chain of production of solar cell panels, there is a need for profitable uses (e.g. recycling) of the residual mixture from the cutting process. In other words, the residual mixture should be treated as a valuable product/starting material rather than a waste material for) low value applications.

In order to reduce cutting costs, abrasive particles lying within the desired particle size distribution have been separated from the residual mixture and recycled as new sawing slurry. Also, the crystalline silicon kerfs mixed with silicon carbide crushed below the desired size has been separated and used in other applications, which normally requires less purity.

### Summary

The present inventors have realized that one way to improve the economy of the cutting process is to use carbon-containing particles as the abrasive particles and then supply the silicon kerfs and the carbon-containing particles from the residual mixture to a reductive silicon-producing process in which the carbon-containing particles are used as reduction material and reacted with silicone oxides (SiO₂).. The oxides will react chemically with carbon containing particles to a liquid silicon melting together with the silicon particles from the sawing kerf and cast as silicon ingots.

Further, the inventors have realized that if the material supplied to the reduction process, including the carbon-containing particles from the cutting process, are of sufficient purity, the resulting silicon product may be used in the production of refined silicon ingots (the silicon from the reduction process is normally purified in a few steps before the ingot is casted). Thus, the inventors have realized that the abrasive carbon-containing particles used in the cutting process may be considered a starting material in the Si-producing process, and that the Si kerfs from the sawing may be recycled to the process producing ingots like the one from which they originate. Naturally, the Si kerfs are of relatively high purity as they originate from an ingot of solar-grade silicon. However, it is important that the carbon-containing particles supplied in the cutting process are "ultrapure" as they would otherwise contaminate the silicon product of the reduction process.

A benefit of this approach is that the step of separating the carbon-containing particles from the Si kerfs in the residual mixture, which have caused many problems in the prior art, is avoided. Also, reacting the carbon containing particles with silicon oxide (SiO₂) provides for an application of relatively high value.

There is thus provided a method of cutting a silicon ingot and recycling residual material, comprising the steps of:
a) cutting a Si ingot using carbon-containing particles as abrasive material such that Si wafers and a residual material comprising Si kerfs and carbon-containing particles are obtained;
b) purifying the residual material such that purified Si kerfs and carbon-containing particles are obtained; and
c) adding the purified Si kerfs and carbon-containing particles to a reduction process producing Si,
the method being characterized in that the carbon-containing particles added in step a) contains less than 0.25 ppm (w/w) boron and less than 0.5 ppm (w/w) phosphorus.

### Brief description of the figures

Figure 1 schematically shows a process according to a non-limiting embodiment of the method of the present disclosure.
Figure 2 is a table presenting the concentration of various elements in the acid solution after acid leaching treatment of residual Si kerfs and SiC particles.

### Detailed description

There is thus provided a method of cutting a silicon ingot and reusing residual material, comprising the steps of:
a) cutting a Si ingot using carbon-containing particles as abrasive material such that Si wafers and a residual material comprising Si kerfs and carbon-containing particles is obtained;
b) purifying the residual material such that purified Si kerfs and carbon-containing particles are obtained; and
c) adding the purified Si kerfs and carbon-containing particles to a reduction process reacted producing silicon,
the method being characterized in that the carbon-containing particles added in step a) is ultrapure.

The elements boron (B) and phosphorus (P) are particularly difficult to remove from silicon. Therefore, an ultrapure carbon-containing material is in the context of the present disclosure considered to be a material having a level of B of less than 0.25 ppm by weight and a level of P of less than 0.5 ppm by weight. It is possible to produce a material having an even lower level of B. Thus, in an embodiment, the level of B is less than 0.20 ppm (w/w), such as less than 0.15 ppm (w/w), such as less than 0.10 ppm (w/w). Further, the level of B may in some embodiments be less than 0.4 or 0.3 ppm (w/w).

The carbon-containing particles may for example be SiC particles or diamond particles. The SiC particles may for example be of hexagonal polytype. SiC and diamond (pure carbon) will react in the reduction process and contribute to the formation of pure silicon.

The method of the present disclosure is preferably part of the process of preparing solar panels. Thus, the silicon of the ingot is preferably "solar-grade" silicon, which means B is less than 0.3 ppm (w/w) and P is less than 0.5 ppm (w/w). Accordingly, the wafers provided by the method of the present disclosure are normally used in solar panels. The wafers may thus have a thickness of 50-350 µm, such as 100-300 µm.

Normally, a sawing wire passes over wire guide rolls and produces several parallel wafers with defined thickness. The carbon-containing particles are supplied to the sawing wire to achieve an abrasive effect on the ingot. The cutting wire is selected to minimize the contamination of the wafers and the residual material. The wire(s) may for example be composed of steel or another metal. In order to achieve an efficient abrasive effect, the carbon-containing particles, in particular the SiC particles, may have a size distribution D50 of 3-25 µm, such as 5-20 µm, such as 5-15 µm, such as 10-15 µm. Most common is SiC microgrits F500 or F600 or F800 according to the international FEPA micro grit standards (42-2:2006) used in producing silicon wafers for photovoltaic purposes.

The carbon-containing particles may be supplied to the wire as a slurry, which means that they are dispersed in a liquid. A frequently employed liquid for this application is poly ethylene glycol (PEG).

If the carbon containing particles are diamonds they may be pressed into the wire or fastened to the surface of the wire (e.g. spring steel wire) by nickel electroplating. The diamond coated wire is cooled with a water based liquid during sawing, thus resulting in a quite different type of residual material than if SiC or another metal carbide is used together with PEG. The description below focuses primarily on the use of metal carbide.

In addition to the wafers, the cutting step produces a residual mixture, normally in the form of a slurry, comprising Si kerfs, carbon-containing particles and any liquid supplied. Accordingly, the residual material obtained in step a) is normally a slurry.

The liquid is separated from the kerfs and particles, e.g. by filtration, and optionally recycled in the cutting process. Thus, the liquid may be purified, mixed with carbon-containing particles and reused in step a). Before being supplied in step a) again, the recycled liquid may be further purified. Also, a fraction of relatively coarse abrasive particles may be separated from the residual material before the purification of step b) and recycled in the cutting process. This is further discussed below.

The filter cake from the above-mentioned filtration of the residual slurry may be milled, e.g. by jet milling, before further processing. Normally, the filter cake is dried before such milling. The purpose of the milling may be to break up chunks of aggregated residual material to facilitate separation, e.g. the above-mentioned separation of the coarser abrasive particles. Accordingly, milling of the preferably dried filter cake may be performed before the size separation and thus before the purification of step b).

In order to reduce surface-oxidizing reactions with water, it is preferred to keep the residence time of the Si kerfs in the residual material short. What to be considered as "short" depends on the circumstances, such as the moisture level, pH and oxygen level in the residual material. In any case, it is preferred that the Si kerfs and the carbon-containing particles are separated from the liquid in connection with the cutting process and not at another site or location. For example, the Si kerfs and the carbon-containing particles may be separated from the liquid within 6 hours, such as within 3 hours, such as within 1 hour, such as within 30 minutes or 15 minutes. In one embodiment, Si kerfs and carbon-containing particles are continuously separated from a residual material produced during the cutting process.

The Si kerfs and carbon-containing particles from the residual may be purified in various ways following the separation from the liquid. The specific purification methods of step b) are not critical to the invention, but care should be taken not to contaminate the carbon-containing particles or Si kerfs or oxidize more of the Si than necessary.

Preferably, step b) involves acid leaching, which means that the Si kerfs and carbon-containing particles are contacted with an acid to reduce the level of contaminants. To avoid dissolution of the Si, it is preferred that a non-oxidizing acid (an acid that, under the circumstances, cannot act as an oxidizing agent) is employed in the acid leaching. Examples of such acids are hydrochloric acid (HCl), hydroiodic acid (Hl), hydrobromic acid (HBr), hydrofluoric acid (HF), phosphoric acid and oxalic acid. In the Example below, HCl is shown to give particularly satisfactory results. In a preferred embodiment, the Si kerfs and carbon-containing particles are thus contacted with HCl in step b).

The conditions of the acid leaching may be optimized for each implementation of the method of the present disclosure and the skilled person is well aware of that parameters such as temperature and acid strength and concentration affects the rate of the reaction. As an example, the Si kerfs and carbon-containing particles may be contacted with the acid for a period of 0.1-12 hours, such as 0.2-6 hours. Also, the temperature of the reaction may for example be in the range of 20-100 °C. If HCl is employed, the concentration of it may be 5-50 %, such as 10-30 %.

Alternatively, but less preferred, the leaching may be carried out under basic conditions. That is, a base may be added instead of an acid to dissolve contaminating metals, such as Fe.

The larger carbon-containing particles from the residual material may be separated and reused as abrasive material in step a). Thus, the method may comprise a step of size separation of particles from the residual material to obtain a fraction of relatively large carbon-containing particles followed by recycling of the fraction to step a) such that the relatively large carbon-containing particles are reused as abrasive material, preferably together with fresh (non-recycled) carbon-containing particles. This may be achieved as the largest particles (in particular in case of SiC particles) are normally carbon-containing particles and not Si kerfs. Thus, the average size of the carbon-containing particles of the separated fraction would in such an embodiment be larger than the average size of the carbon-containing particles of the residual material. For example, the mean or median diameter of carbon-containing particles of the fraction may be at least 25, 50 or 100 % larger than the same diameter of the carbon-containing particles of the residual material from step a).

Thus, larger carbon-containing particles may for example be separated between steps a) and b), which means that the fraction may be separated before the acid leaching.

The size separation may for example be performed by cyclone separation using e.g. a hydrocyclone.

The kerfs and particles from the residual material are small and may be difficult to handle industrially. For example, the fine size of the particles may cause significant losses when the particles are added to the reduction process. Thus, in one embodiment of the method, the Si kerfs and carbon-containing particles from step b) are agglomerated before step c). The agglomeration may for example be pelletizing or briquetting.

In order to obtain a sufficient agglomeration and/or improve the strength of the agglomerates, various additives may be considered. For example, a binder may be added to aid the agglomeration. The binder may for example be a carbohydrate, normally a purified carbohydrate, such as purified sugar, of biological origin. The binder may also be a resin.

Another possible additive is water, which preferably is de-mineralized to prevent contamination of the silicon product. Silica fume (sometimes referred to as microsilica) is another possible additive. The silica fume may have a surface area of at least 10000 m²/kg.

If a binder is added, it is typically added in an amount such that it constitutes 1-10 % (w/w) of the agglomerates. If water is added, it is also typically added in an amount such that it constitutes 1-10 % (w/w) of the agglomerates. Likewise, the silica fume typically constitutes 1-10 % of the agglomerates if it is added.

In the reduction process, which is normally carried out in a reduction furnace, quartz (SiO₂) is reduced to silicon by SiC and/or pure carbon (C) in a high-temperature process (normally above 1800°C) to produce Si.

Thus, to the reduction process of step c) are normally supplied, in addition to the Si kerfs and carbon-containing particles from step b), SiO₂ and carbon in the form of SiC and/or pure C. Such SiO₂, SiC and/or C may be added already in the agglomeration process. Thus, the ratio of the reactants may be balanced already in the agglomerates containing the material from step b). Alternatively, such SiO₂, SiC and/or C may be agglomerated separately or not be agglomerated because the particles thereof are already of a sufficient size.

The different "starting materials" of the reduction process may thus be mixed in appropriate proportions (to balance the reaction) in the agglomerates or when being charged to the reduction furnace.

The skilled person understands that any fresh material (SiO₂, SiC and/or C) is preferably of high purity. For example, the levels of B and P in the fresh material may have at least the same purity as the carbon-containing particles, i.e. a level of B of less than 0.25 ppm by weight and a level of P of less than 0.5 ppm by weight.

If agglomeration is performed, the average diameter of the agglomerates is preferably at least 2 mm, such as at least 5 mm.

The silicon produced by the reduction process is normally purified in one or more steps. Examples of such purification steps are:
i) gas-refining, during which a reactive gas is bubbled through the silicon melt;
ii) slag refining;
iii) filtering;
iv) settling;
v) skimming;
vi) directional solidification, during which metals having a low small distribution coefficient are separated from the solidifying silicon;
vii) cutting, during which solid silicon having relatively high levels of contaminants are removed (as described below, cutting is often performed after directional solidification); and
viii) surface cleaning, such as blasting and/or etching.

Preferably, a new Si ingot that may be provided in step a) is prepared from the Si produced in step c). One or more of the above-mentioned purification steps may be needed and the resulting silicon may also be mixed with a standard or offgrade solar grade silicon before the melting, possible refining and casting process producing the ingot to ensure a sufficient purity (solar-grade) of the Si in the ingot.

### Detailed description of an exemplary embodiments

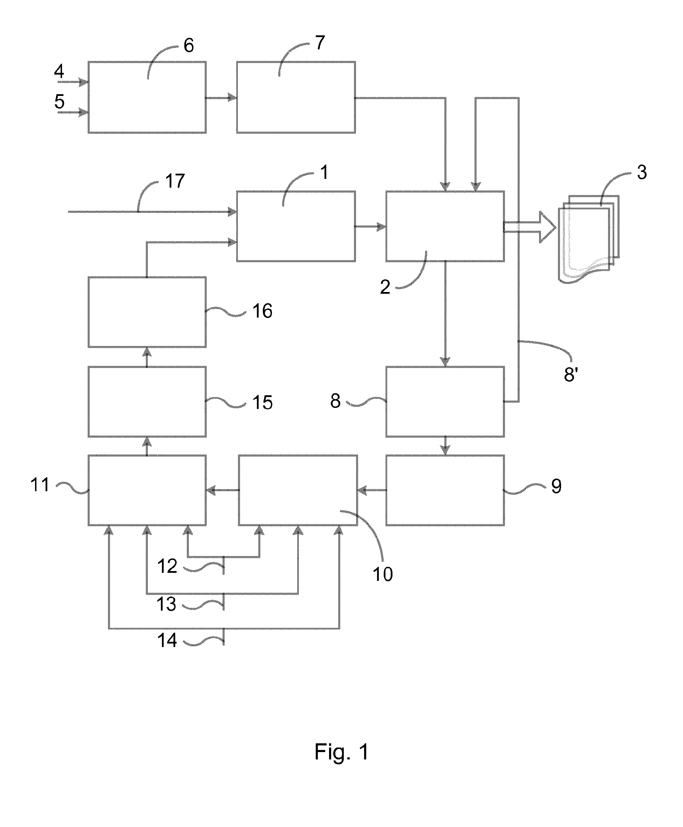

With reference to figure 1, a process according to a non-limiting embodiment of the present disclosure is described.

A solar grade Si ingot is produced by directional solidification 1. In the sawing process 2, the ingot is first fixated. For example, the ingot may be glued to glass plates or plates of another material, such as silicon having a B level close to that of solar grade silicon. The plates are in turn attached to the saw. After fixation, the ingot is cut by sawing wires onto which a slurry of a liquid (e.g. PEG) and ultrapure (UP) SiC microgrits (abrasive material) of chosen FEPA standard have been applied to produce Si wafers 3 and a residual slurry comprising spent liquid, SiC grits and Si kerfs from the cutting process. The virgin UP SiC may be produced by reacting 6 high-purity quartz 4 and high-purity carbon 5. The obtained virgin UP SiC may then be ground 7 to suitable grits.

The residual slurry from the sawing process 2 is collected and liquid is separated 8 from it, e.g. by filtering. The separated liquid may then be reused 8' in the sawing process 2, optionally after purification (not shown). If filtering is employed, the filter cake may be dried and disintegrated to facilitate further separation of its components. Such disintegration may for example be carried out in a jet mill. The coarser SiC grits may be separated 8 after the liquid separation (and after the disintegration of the filter cake, if applicable) and reused 8' in the sawing process 2 as a complement to virgin UP SiC grits. Such separation of coarser particles may be carried out in a hydrocyclone (not shown).

The material remaining from the separation step 8 is cleaned 9, primarily from contaminating metals originating from the sawing process. Preferably, such cleaning 9 is carried out by acid leaching.

The Si kerfs and SiC grits from the cleaning 9 are then agglomerated 10 before being charged to a reduction and remelting process 11 in a reduction furnace. Additional starting material, SiO₂ 12 and carbon in the form of SiC 13 and/or C 14, for the reduction process in the reduction furnace may also be added to the agglomeration 10 such that the agglomerates comprise "fresh" material in addition to material obtained from the sawing process 2. Alternatively, all the fresh starting material 12, 13 and/or 14 is charged directly into the reduction furnace 1, optionally after a parallel agglomeration process (not shown). The skilled person realizes that any fresh starting material shall be of high purity.

The ratio of the different reactants in the reduction and remelting process 11 is stoichiometrically balanced in relation to the desired silicon yield.

Also, silicon by-products from other processes may be added to the reduction and remelting process 11. Examples of such byproducts are the bottom-cuts, side-cuts or hole or parts of top-cuts from the cuttings of ingots produced by directional solidification.

The reduction and remelting process 11 produces liquid silicon that may be refined 15 with gas, slag, filtering, settling and/or skimming. Such refining 15 may be followed by additional refining by directional solidification 16, during which Fe, Al and other metals having a small distribution coefficient are separated from the solidifying silicon as they have a higher solubility in the melt and low solubility in the solid Si. In bottom-up directional solidification, contaminants thus end up in the top layer of the solidified silicon and are simply removed by removal of the top layer/crust.

The refined silicon from the reduction and remelting process 11, optionally in combination with other virgin solar grade silicon 17, is then used for the directional solidification 1 producing the solar grade silicon ingot that is cut to the wafers 3.

### Example - acid leaching

A silicon ingot was cut using ultrapure SiC particles (SiC F600 FEPA microgrit) in PEG and a steel sawing wire. Further, the sawing wire was covered by some brass originating from drawing nozzle in producing the steel wire. (Accidentally, a boron-doped silicon ingot was selected for the experiment. Thus, the boron levels presented below are not representative for solar-grade silicon. When the invention is carried out in practice, the boron level should instead be as low as possible.) Residual slurry from the cutting comprising Si kerfs and SiC particles in PEG was filtered to obtain a filter cake having 80 % solid material (and thus 20 % PEG). The remaining PEG in the filter cake was removed by washing with demineralized water. To prevent that possible Si acids were converted to solid orthosilicate or diorthosilicate on the surface of the Si kerfs, the washed solids were dried by applying "water free" acetone and then evaporate the water-acetone liquid.

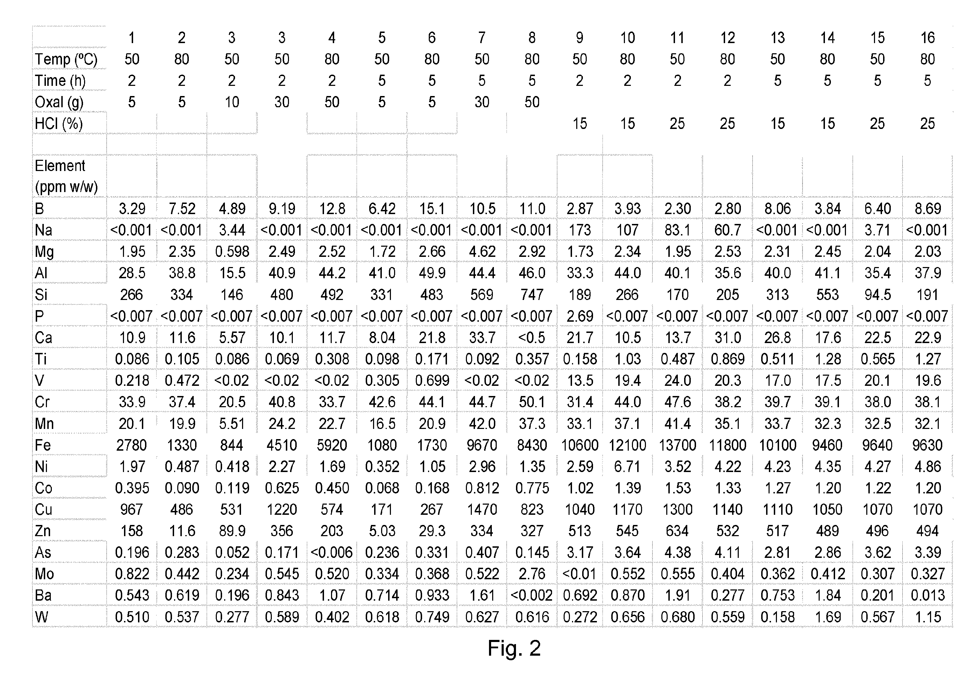

Acid leaching was then carried out using two different non-oxidizing acids, HCl and oxalic acid. Each acid was tested at two different temperatures, two different concentrations and two different reaction times. The results of the experiments are shown in figure 2. The level of dissolved Si in the acid from the leachings is generally between 200-570 ppm, which is considered to be relatively low. Further, it is shown that both acids dissolves iron from the steel wire, copper and zinc from the brass at all temperatures, concentrations and reaction times. HCl is however shown to dissolve more of these elements than oxalic acid, independently of time, concentration and temperature. As HCl at the same time dissolves less Si, it is concluded that HCl is to prefer over oxalic acid.

Further, the solid material was analyzed with glow discharge mass spectrometry (GDMS) before and after the acid leaching. In table 1 below it is shown that the solid material contains about 1.3 % (w/w) Fe, 0.11 % (w/w) Cu and 620 ppm (w/w) Zn as the main contaminants. These contaminants originated from the sawing wire..

After the acid leaching, more than 99 % of the Fe, at least 98 % of the Cu and at least 99.5 % of the Zn had been removed when HCl was used as shown in table 2. It may thus be concluded that an efficient removal of the contaminants in question was achieved with all reactions times, temperatures and acid concentrations. The Fe, Cu and Zn levels were also reduced by oxalic acid, but not as efficiently and to a more unpredictable degree.

**Table 1.**

| **Element** | **Conc (ppm w/w)** | **Element** | **Conc (ppm w/w)** |
|---|---|---|---|
| B | 0.75 | Cr | 40 |
| Na | 23 | Mn | 38 |
| Mg | 9.7 | Fe | ∼ 1.3% (w/w) |
| Al | 83 | Co | 2.5 |
| P | 5.7 | Ni | 12 |
| S | 9.4 | Cu | ∼ 0.11 % (w/w) |
| Cl | 5.4 | Zn | 620 |
| K | 1.1 | Zr | 5.5 |
| Ca | 26 | Ag | 4.5 |
| Ti | 7.8 | W | 18 |
| V | 7.6 | | |

**Table 2.**

| | | | | | | | | | |
|---|---|---|---|---|---|---|---|---|---|
| Temp (°C) | 50 | 50 | 80 | 50 | 80 | 50 | 80 | 50 | 80 |
| Oxal (g) | 30 | 30 | 50 | | | | | | |
| HCl (%) | | | | 25 | 25 | 15 | 15 | 25 | 25 |
| Time (h) | 2 | 5 | 5 | 2 | 2 | 5 | 2 | 5 | 5 |
| Fe [ppm w/w] | ∼ 8400 | ∼ 2200 | ∼ 100 | 98 | 52 | 56 | 50 | 56 | 38 |
| % Fe removed | 35.4 | 83.1 | 68.5 | 99.2 | 99.6 | 99.6 | 99.6 | 99.6 | 99.7 |
| Cu [ppm w/w] | 86 | 130 | 330 | 22 | 20 | 16 | 13 | 19 | 16 |
| %Cu removed | 92.2 | 88.1 | 70.0 | 98.0 | 98.2 | 98.6 | 98.8 | 98.3 | 98.6 |
| Zn [ppm w/w] | 330 | 230 | 300 | 3.3 | 1.8 | 1.6 | 1.7 | 2.1 | 2.7 |
| % Zn removed | 46.8 | 62.9 | 51.6 | 99.5 | 99.7 | 99.7 | 99.7 | 99.7 | 99.6 |

## Claims

1. Method of cutting a silicon ingot and recycling residual material, comprising the steps of:
a) cutting a Si ingot using carbon-containing particles as abrasive material such that Si wafers and a residual material comprising Si kerfs and carbon-containing particles are obtained;
b) purifying the residual material such that purified Si kerfs and carbon-containing particles are obtained; and
c) adding the purified Si kerfs and carbon-containing particles to a reduction process producing Si,
the method being **characterized in that** the carbon-containing particles added in step a) is contains less than 0.25 ppm (w/w) boron and less than 0.5 ppm (w/w) phosphorus.

2. Method according to claim 1, wherein the carbon-containing particles are selected from SiC particles and diamond particles.

3. Method according to claim 1 or 2, wherein the carbon-containing particles contains less than 0.15 ppm (w/w) boron and/or less than 0.3 ppm (w/w) phosphorus.

4. Method according to any one of the preceding claims, wherein the purification of step b) comprises separating Si kerfs and carbon-containing particles from the residual material and contacting the separated Si kerfs and carbon-containing particles with an acid, such as HCl.

5. Method according to any one of the preceding claims, wherein the purified Si kerfs and carbon-containing particles from step b) are agglomerated before being added to the reduction process of step c).

6. Method according to any one of the preceding claims, wherein the carbon-containing particles are supplied in step a) as a mixture with a liquid, such as polyethylene glycol (PEG).

7. Method according to claim 6, wherein the cutting of step a) comprises contacting the ingot with a sawing wire onto which the mixture of the carbon-containing particles and the liquid is applied.

8. Method according to claim 7, wherein the sawing wire comprises iron.

9. Method according to any one of the preceding claims, wherein a fraction of the carbon-containing particles from the residual material is separated and reused in step a) as abrasive material.

10. Method according to claim 9, wherein the average size of the carbon-containing particles in the separated fraction is larger than the average size of the carbon-containing particles in the residual material.

11. Method according to any one of the preceding claims, wherein a Si ingot is provided from the Si produced in step c), optionally after purification and/or blending with another feedstock of solar grade silicon.

12. Method according to claim 11, wherein the Si ingot from the Si produced in step c) is subjected to steps a)-c).
